# EUROPEAN PATENT APPLICATION

(11) **EP 2 712 811 A1**
(43) Date of publication of application: **02.04.2014**
(21) Application number: 12186770.9
(22) Date of filing: 01.10.2012
(51) Int. Cl.: B64F 5/00, E04F 21/00

(54) **Tool For Installing Panels**

(71) Applicant: Airbus Operations GmbH, 21129 Hamburg (DE)
(72) Inventor: Bendel, Sven, 21438 Brackel (DE)
(74) Representative: Isarpatent

(57) **Abstract**

The present invention provides a tool (1) for use when installing panels, especially for laying floor panels, comprising: a multi-part elongate body portion (2) having a similarly multi-part projecting edge portion (3) configured to be inserted along a side of a panel to retain a sealing member along the side of the panel from interfering with laying of an adjacent panel; wherein an active length (L1) of the projecting edge portion (3) is adjustable to suit a variety of panel dimensions by selectively engaging and/or placing at a mutual distance parts of the projecting edge portion (3).

## Description

The invention relates to a tool for use in the installation of panels, especially panels having a seal or sealing bead on or around at least part of their periphery or circumference.

In this regard, the tool of the invention is particularly suitable for use in laying floor panels, e.g. during aircraft construction, and it will be convenient to now describe the invention in this exemplary context. As will be appreciated by persons skilled in the art, however, the invention is not limited to this particular application, but may also be used with other types of panels, e.g. wall or ceiling panels, in other fields.

When laying floor panels having an elongate seal or sealing bead on or around their periphery, these sealing beads can often interfere with one another when a new panel is placed or inserted adjacent an existing panel, particularly when the insertion is in the vertical direction. The elongate seals or sealing beads on or around the periphery of the panels are typically of a flexible polymer material and are designed to provide a water- or air-tight seal between the panels without the application of wet sealants, like silicone gels. To this end, the adjacent seals or sealing beads of adjacent panels are typically intended to bear against one another in a plane of the respective panels to achieve a desired sealing effect.

Because these seals or sealing beads are typically biased in the radially or peripherally outward direction, they are free to assume a maximum outward extent when there is no adjacent panel currently in place. As such, the seals or sealing beads then encroach somewhat on the neighbouring space into which an adjacent panel is to be inserted, leading to difficulties inserting the next adjacent panel.

It is therefore an object of the present invention to provide a new and improved tool for use in placing or laying panels, especially floor panels having a seal or sealing bead on or around at least a part of their periphery or circumference.

In accordance with the present invention, a tool is provided for use in the installation of panels, especially for laying of floor panels, having the features recited in claim 1. Preferred features of the present invention are recited in the dependent claims.

According to one aspect, therefore, the invention provides a tool for installing panels, and particularly for laying floor panels, the tool comprising: an elongate body portion having a projecting edge portion configured to be inserted along a side of a panel to restrain a sealing member along the side of the panel from interference with placement or laying of an adjacent panel; wherein a length of the projecting edge portion is selectively adjustable to suit a variety of panel dimensions.

With the tool of the present invention, a user is thus able to retract or to restrain the sealing member provided along a side of a panel so that it does not impede or interfere with placement or installation of an adjacent panel. To this end, the projecting edge portion preferably presents a smooth surface to facilitate placement or insertion of the adjacent panel along that side. Further, because the projecting edge portion is selectively adjustable, the tool of the invention can be adapted for use with different sized panels.

In a preferred embodiment, the length of the projecting edge portion corresponds to, or is dependent upon, a length of the elongate body portion, and said length of the elongate body portion is selectively adjustable to suit a variety of panel dimensions. In this regard, the elongate body portion may preferably include a plurality of body members which are serially arranged along a longitudinal axis of the elongate body portion, the plurality of body members being selectively connectable or combinable with one another to provide or form the elongate body portion in different lengths. That is, one or more of the body members may be selectively removable or separable from other body members arranged in series along the axis to provide or form the body portion in said different lengths. Each of the plurality of body members may therefore include a respective edge member which projects therefrom, with the body members designed to be selectively connectable or combinable with one another such that the respective edge members thereof combine to form the projecting edge portion of the tool.

In a particularly preferred embodiment of the invention, the elongate body portion of the tool is provided or supported on a frame, and one or more of the plurality of body members is selectively movable on the frame to a position separate from the other body member(s) forming the elongate body portion to provide said different lengths. Each of the plurality of body members which is arranged in or moved to a position separate from the elongate body portion desirably remains attached to the frame. In this regard, each of the body members may be pivotally and/or slidably movable on the frame. For example, the frame may include one or more rail member, upon which the various body members are mounted for pivoting and/or sliding movement.

In a particularly preferred embodiment, the body members of the tool are configured for interlocking engagement with one another along the longitudinal axis of the body portion. To this end, each of the body members may include one or more connection elements for interaction and/or engagement with a corresponding connection element of an adjacent body member. The connection elements may, for example, comprise male and female elements, such as tongue-and-groove elements or pin-and-socket elements. The connection elements may provide an interference fit and/or interlocking engagement of adjacent body members. Furthermore, the tool may optionally include a locking device for holding the selectively connected or combined body members fixed with respect to one another. The locking device may, for example, comprise a releasable clamping mechanism.

In a preferred embodiment, the plurality of body members may all be of substantially the same size and shape. In a more preferred alternative embodiment, however, the tool includes a variety of different sized or shaped body members to obtain specific different lengths of the body portion desired. The individual body members of the tool may therefore be coded for various possible combinations for obtaining the specific different lengths of the elongate body portion desired.

In a preferred embodiment, the tool may comprise a handle for manual insertion of the projecting edge portion along a side of a panel. The handle may be provided on an upper part of the body portion and/or on the frame of the tool.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic perspective view of a tool for floor panels according to an embodiment of the invention, with the body members of the tool in one particular selectively combined or interconnected state;
- Fig. 2: is a schematic perspective view of the tool shown in Fig. 1, with the body members of the tool in a non-combined or loose state; and
- Fig. 3: is a schematic perspective view of the tool shown in Fig. 1, with the body members of the tool in an alternative selectively combined or interconnected state.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not necessarily required. It will also be understood that the terms and expressions used in the present specification have the ordinary meaning as is accorded to such terms and expressions with respect to their corresponding respective areas of inquiry and study, except where specific meanings have otherwise been set forth herein.

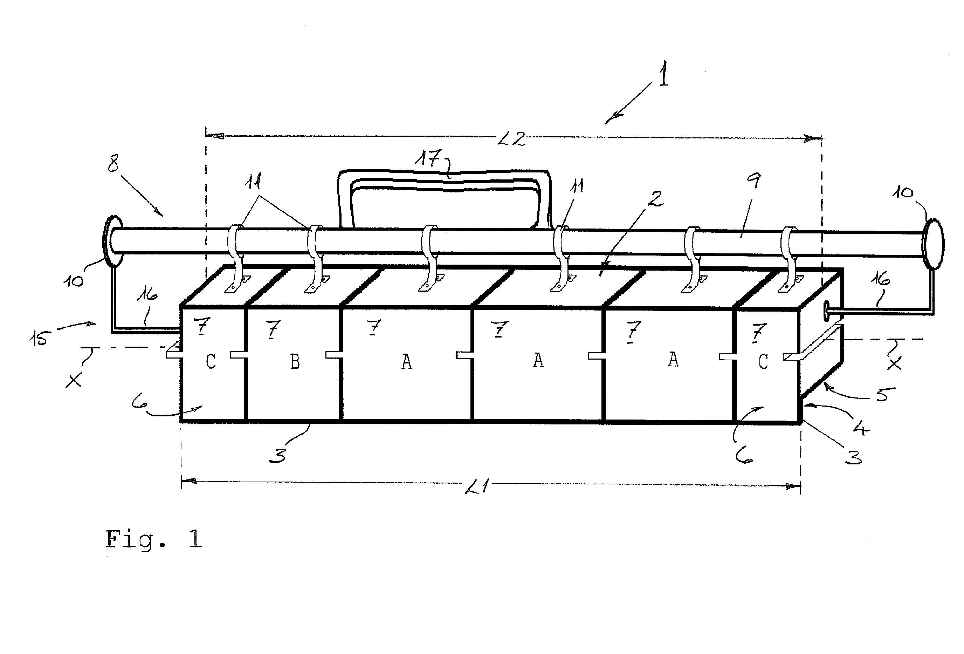

With reference to Fig. 1 of the drawings, a tool 1 according to an embodiment of the invention for use in the installation of floor panels (not shown) is illustrated schematically and comprises an elongate body portion 2 having a projecting edge portion 3 which projects downwardly from a bottom or base part of the body portion 2. This projecting edge portion 3 is formed of a relatively thin, yet robust and rigid material (e.g. sheet metal, like steel or aluminium) and is configured to be inserted along a side of an installed floor panel to retract, restrain and/or retain a sealing bead (not shown) extending along that side of the floor panel from interfering with placement or installation of an adjacent floor panel. In particular, a rear face or surface 4 of the projecting edge portion 3 is designed to engage the elongate seal or sealing bead provided along the side of the installed floor panel while a bottom or base surface 5 of the body portion 2 seats on or against an upper surface of the installed floor panel. On the other hand, a front face or surface 6 of the elongate body portion 2 is provided substantially flat and smooth to extend continuously and uninterruptedly into the projecting edge portion 3. In this way, the front face 6 facilitates the placement or insertion of the next panel along this edge. To this end, the front face 6 of body portion 2 may be formed by sheet elements which project downwards from the body portion 2 to form the projecting edge portion 3, as explained further below.

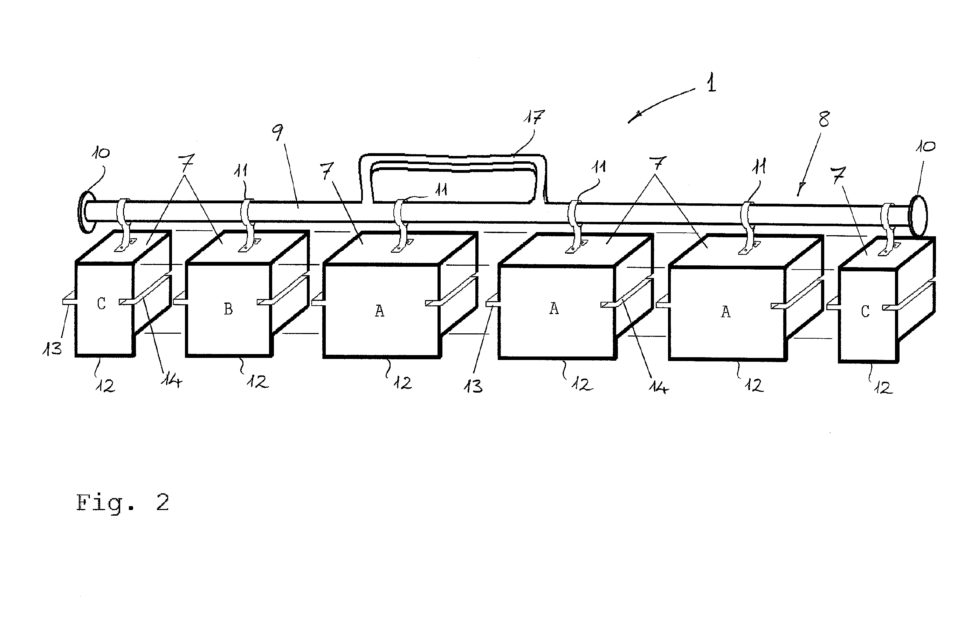

With reference now also to Fig. 2 of the drawings, it will be appreciated that the elongate body portion 2 of the tool 1 comprises a plurality of body members 7 which are arranged in series along a longitudinal axis X of the body portion 2. These body members 7 have a standard or uniform cross-section in a plane perpendicular to the longitudinal axis X, but have different sizes or dimensions in the axial direction. In this particular embodiment, the tool 1 has three different sized body members 7, which are respectively labelled A, B and C. These body members 7 are mounted or supported in series on a frame 8 of the tool 1, the frame 8 in this case comprising at least one rail member 9 that terminates at its opposite ends with a respective stop member 10, here in the form of a plate or disc. Each of the body members 7 is attached to the rail member 9 via a respective bracket 11. As a result, the body members 7 are movable on the frame 8 in the axial direction (e.g. via sliding movement) as well as about the axis X (e.g. rotationally or pivotally) but are nevertheless retained on the frame 8 by the stop plates 10 and the respective pivot brackets 11.

As is apparent from Figs. 1 and 2 of the drawings, each of the individual body members 7 has a respective edge member 12 projecting therefrom, and the plurality of body members 7 are selectively combinable such that the respective edge members 12 thereof combine to form the projecting edge portion 3 of the tool 1. In this regard, each of the body members 7 is configured for inter-engagement with another of the plurality of body members 7 along the longitudinal axis X of the tool. In particular, each body member 7 in this embodiment includes at least one male and/or female connection element 13, 14 - in this case, provided in the form of a tongue element 13 and a groove element 14 for interconnection or inter-engagement with a corresponding groove or tongue element 14, 13 of an adjacent one of the body members 7.

The tongue and groove elements 13, 14 of the respective body members 7 of the tool 1 may be configured to engage one another in a friction fit or an interference fit to provide a robust interconnection of the body members 7 such that the elongate body portion 2 remains rigidly integral in use. To ensure that the body members 7 of the elongate body portion 2 are not able to loosen or separate from one another in use, however, the tool 1 may further comprise a locking device 15 for holding all of the selectively connected or combined body members 7 fixed against separation from one another in the axial or longitudinal direction X. In this case, the locking device 15 is attached to the frame 8 and comprises a clamping mechanism with screw rods 16 that extend from the ends of the rail member 9 and act to apply a force to the body members 7 at opposite ends of the elongate body portion 2 to press the body members 7 together in the longitudinal direction X. Because a width of each edge member 12 in the axial direction corresponds to a width of the respective body member 7, a length L1 of the projecting edge portion 3 of the tool 1 along the axis X essentially corresponds to a length L2 of the elongate body portion 2 in this embodiment.

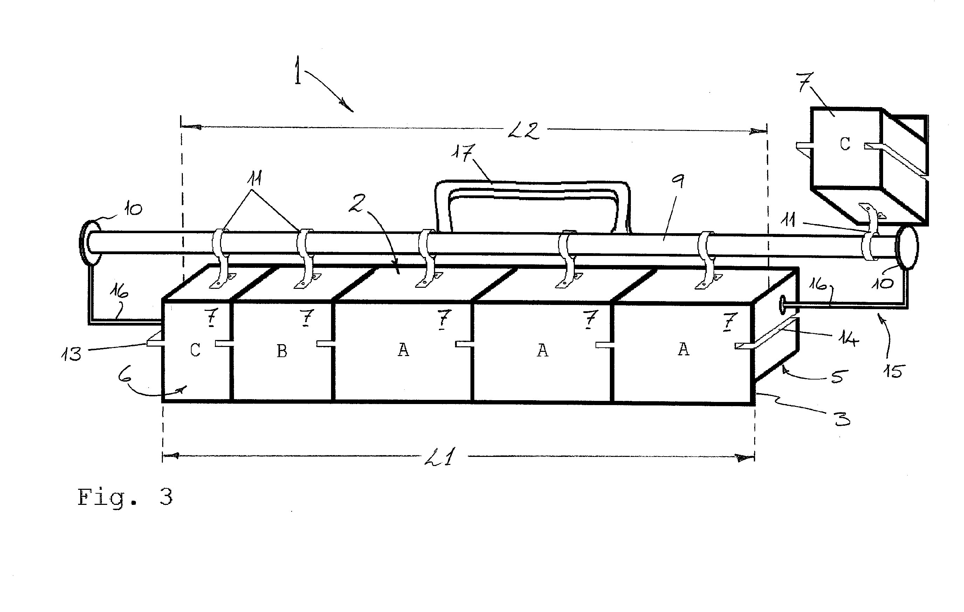

With reference now to Fig. 3 of the drawings, an example of the selective adjustability of a length L1 of the projecting edge portion 3 is illustrated. In this case, one of the body members 7 (size C) at an end of the series of body members 7 mounted on the frame 8 is separated and spaced from the other body members 7 by sliding and pivotal movement on the rail member 9. The other body members 7 are interconnected with one another via the tongue-and-groove connecting elements 13, 14 and the clamping device 15 such that the elongate body portion 2 of the tool now comprises the selectively combined and interconnected series "CBAAA" of body members 7. Compared to Fig. 1, the length L1 of the projecting edge portion 3 of the tool 1 has thus been shortened to suit a different panel size or dimension with a minimum of effort. Each body member which is separated from the body portion 2 of the tool 1 to reduce the length L2 thereof and thereby the length L1 of the projecting edge portion 3 (in this example, the body member 7 labelled C) may preferably be releasably held or fixed in a separated position (e.g. as shown in Fig. 3) so that it does not interfere with the projecting edge portion 3 of the tool during use.

The size labels A, B, C for each of the body members 7 may be used to form codes corresponding to specific panel sizes, with the codes also telling a user of the tool 1 which body members 7 are to be combined for a particular panel size. For example, these codes may include: "AA", "BAA", "AAA", "BAAA", "CBAA", "CBAAA", and "CBAAAC". It will be noted that other combinations, such as "CA" and "CAAAC", are also contemplated by the present invention, however.

As will be understood by skilled persons, the tool 1 in the embodiment of Figs. 1 to 3 is designed for manual operation via a handle 17 attached to the frame 8. In particular, the user holds the tool 1 via the handle 17 and places the projecting edge portion 3 against a sealing bead (not shown) along the side of a floor panel to retract or restrain that sealing bead from interfering with placement of the next panel. The length L1 of the projecting edge portion 3 can be adjusted by the user to match the length of the sealing bead at the side of a variety of different panels.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

For example, it will be appreciated that the frame 8 of the tool 1 may optionally include two or more rail members 9 that may be arranged adjacent and parallel to one another. In this way, the body members 7 of the tool 1 need not be connected to the same rail member 9. That is, some body members 7 may be connected to one of the rail members 9 while other body members 7 may be connected to another of the rail members 9. This enables greater flexibility in the combinations of the different body members 7 along the longitudinal axis X when forming the body portion 2 of the tool in different lengths L1 because, for example, centrally located body members 7 may be more easily separated or pivoted away on their respective one of the rail members 9 from the outer ones of the serially arranged body members 7. It will also be appreciated that the brackets 11 shown in Figs. 1 to 3 are illustrative only, such that the brackets 11 may take any of a variety of different forms, though preferably allowing both pivoting and sliding movement of the individual body members 7 on their respective rail member 9. In this regard, the brackets 11 may include a double-ring or double-eyelet and provide more stable mounting of the body members 7 to the frame 8 for application of force to the elongate body portion 2 and projecting edge portion 3 during use of the tool 1.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: tool
- 2: elongate body portion
- 3: projecting edge portion
- 4: rear face or surface of the edge portion
- 5: bottom or base face or surface of the body portion
- 6: front face or surface of the body and/or edge portion
- 7: body member
- 8: frame
- 9: rail member
- 10: stop member or stop plate
- 11: bracket
- 12: edge member
- 13: male connection element or tongue element
- 14: female connection element or groove element
- 15: locking or clamping device
- 16: screw rods
- 17: handle
- X: longitudinal axis
- L1: length of the projecting edge portion
- L2: length of the elongate body portion

## Claims

1. A tool (1) for installing panels, especially for laying floor panels, comprising: an elongate body portion (2) having a projecting edge portion (3) configured to be inserted along a side of a panel to retain a sealing member along the side of the panel from interfering with laying of an adjacent panel;
wherein a length (L1) of the projecting edge portion (3) is selectively adjustable to suit a variety of panel dimensions.

2. A tool (1) according to claim 1, wherein the length (L1) of the projecting edge portion (3) corresponds to, or is dependent on, a length (L2) of the elongate body portion (2), and wherein the length (L2) of the body portion (2) is selectively adjustable to suit a variety of panel dimensions.

3. A tool (1) according to claim 2, wherein the elongate body portion (2) includes a plurality of body members (7) serially arranged along a longitudinal axis (X) of the body portion (2), wherein the plurality of body members (7) are selectively combinable to form the elongate body portion (2) in different lengths.

4. A tool (1) according to claim 3, wherein each of the body members (7) includes a respective edge member (12) projecting there-from, wherein the plurality of body members (7) are selectively combinable such that the respective edge members (12) thereof combine to form the projecting edge portion (3) of the tool (1).

5. A tool (1) according to claim 3 or claim 4, wherein one or more of the plurality of body members (7) is/are selectively removable from the elongate body portion (2) to form said different lengths.

6. A tool (1) according to any of claims 3 to 5, wherein the elongate body portion (2) is supported on a frame (8) and one or more of the plurality of body members (7) is selectively movable on the frame (8) to a position separate from the elongate body portion (2) to provide said different lengths.

7. A tool (1) according to claim 6, wherein each of the plurality of body members (7) is mounted for pivoting and/or sliding movement on the frame (8).

8. A tool (1) according to claim 7, wherein the frame (8) includes one or more rail member (9), on which the body members (7) are mounted for said pivoting and/or sliding movement.

9. A tool (1) according to any of claims 1 to 8, wherein the body members (7) are configured for inter-engagement with one another along the longitudinal axis (X) of the body portion (3), each body member (7) including at least one connection element (13, 14) for interaction and/or engagement with a corresponding connection element (14, 13) of an adjacent body member (7).

10. A tool (1) according to any of claims 1 to 9, wherein the body members (7) are coded for specific combinations for obtaining the different lengths of the elongate body portion (2) desired.

11. A tool (1) according to any of claims 1 to 10, further having a locking device (15) for holding the selectively connected or combined body members (7) fixed in an axial or longitudinal direction with respect to one another.

12. A tool (1) according to any of claims 1 to 11, including a handle (17) for manual insertion of the edge portion (3) along a side of a panel, wherein the handle (17) is provided on the frame (8) or an upper part of the body portion (2).

13. Use of a tool (1) according to any of claims 1 to 12 for installing panels, especially for laying floor panels in an aircraft or spacecraft.

14. Use of a tool (1) as claimed in claim 13, wherein each panel is placed or positioned on a supporting structure using the tool (1), and is preferably fastened to the supporting structure, for example with screws or other fasteners, after the panel is in place or in position on the supporting structure.
